# EUROPÄISCHE PATENTSCHRIFT

(11) **EP 1 923 933 B1**
(45) Veröffentlichungstag und Bekanntmachung des Hinweises auf die Patenterteilung: **29.07.2009**
(21) Anmeldenummer: 06405478.6
(22) Anmeldetag: 14.11.2006
(51) Int. Cl.: H01M 2/10, H02J 7/00

(54) **Vorrichtung für die Energieversorgung**
Device for the supply of energy
Dispositif pour l'alimentation en énergie

(43) Veröffentlichungstag der Anmeldung: 21.05.2008
(73) Patentinhaber: Micronel AG, 8317 Tagelswangen (CH)
(72) Erfinder: Scherrer, Ernst, 8606 Greifensee (CH)
(74) Vertreter: Groner, Manfred

(56) Entgegenhaltungen:
- WO-A-20/05010429
- US-A- 5 353 208
- US-A- 5 675 234
- US-A- 5 954 420
- US-A1- 2005 122 715
- US-B1- 7 091 694

## Beschreibung

Die Erfindung betrifft eine Vorrichtung für die Energieversorgung nach dem Oberbegriff des Anspruchs 1.

Vorrichtungen dieser Art sind für die elektrische Versorgung elektrischer Geräte allgemein bekannt. Damit die erforderliche Spannung erreicht werden kann, sind zwei oder mehrere Energiezellen in Serie geschalten. Diese Energiezellen, beispielsweise Batterien bzw. Akkumulatoren, sind auswechselbar. Die Energiezellen sind jeweils in ein Fach eines Trägers bzw. Gehäuses eingesetzt und darin jeweils am Pluspol und am Minuspol mit Anschlussstellen verbunden, an denen der Strom entnommen werden kann. Ein Strom kann nur entnommen werden bzw. das Gerät genutzt werden, wenn in sämtliche Fächer jeweils eine Energiezelle eingesetzt ist. Steht die vorgesehene Anzahl an Energiezellen nicht zur Verfügung, so kann ein solches Gerät nicht genutzt werden. Eine Nutzung ist auch dann ausgeschlossen, wenn lediglich eine Energiezelle nicht ersetzt werden kann. Die Zuverlässigkeit solcher Geräte ist deshalb eingeschränkt. Bei zahlreichen Geräten, beispielsweise bei Geräten, die lebenserhaltend sind, ist jedoch eine sehr hohe Zuverlässigkeit wesentlich. Wünschbar wäre deshalb eine Vorrichtung, die mit einer variablen Anzahl von Energiezellen bestückbar ist und jeweils als Energiequelle verwendet werden kann.

Die US-A-5,675,234 offenbart eine kontinuierlich überwachte mit Batterien betriebene Energiequelle. Vier Batterien bilden ein parallel verbundenes Paar. Die Batterien der beiden Paare sind in Serie miteinander verbunden. Es ist eine Schaltung mit einem Spannungsmesser vorgesehen, welche eine Spannungsänderung anzeigt. Weiter ist ein Schalter für jede Reihe vorgesehen, so dass eine Reihe mit einer Zelle, deren innerer Widerstand sich geändert hat, weggeschaltet wird.

Durch die US-A-5,954,420 ist eine Stabtaschenlampe bekannt geworden, die ein Gehäuse zur Aufnahme von mehreren Batterien aufweist. Die Taschenlampe kann mit unterschiedlich vielen Batterien betrieben werden. Hierzu weist sie ein teleskopisch in seiner Länge verstellbares Gehäuse auf. Je nach Anzahl der in das Gehäuse eingesetzten Batterien wird das Gehäuse verlängert oder verkleinert. Damit in jedem Fall der elektrische Kontakt gewährleistet ist, wird beim Verstellen der Länge ein Kontaktteil entsprechend verschoben. Die Lampe kann somit auch dann betrieben werden, wenn beispielsweise anstelle von vier vorgesehenen Batterien lediglich zwei zur Verfügung stehen. Die hier vorgesehene teleskopische Verstellbarkeit ist jedoch bei vielen Geräten nicht möglich oder nicht zweckmässig.

Der Erfindung liegt die Aufgabe zugrunde, eine Vorrichtung der genannten Art zu schaffen, die mit einer variablen Zahl von Energiezellen bestückt und genutzt werden kann.

Die Aufgabe ist bei einer gattungsgemässen Vorrichtung dadurch gelöst, dass jeder Pluspol und der dazugehörige Minuspol jeweils über einen Schalter elektrisch miteinander verbunden sind und dieser Schalter so ausgebildet ist, dass er beim Einsetzen einer Energiezelle unterbrochen wird. Fehlt bei einer solchen Vorrichtung eine Batterie, so werden der nicht benutzte Pluspol und der entsprechende Minuspol mit dem Schalter überbrückt. Die Vorrichtung ergibt somit auch dann eine Spannung, wenn nicht die vorgesehene maximale Anzahl von Energiezellen eingesetzt ist. Beim Einsetzen einer Batterie wird der entsprechende Schalter unterbrochen und die Überbrückung der Pole erfolgt hier mit der Energiezelle. Vorzugsweise ist wenigstens ein Schalter so ausgebildet, dass er beim Einsetzen der Energiezelle selbsttätig unterbrochen wird. Das Einsetzen und Auswechseln der Energiezellen ist damit ebenso einfach wie bei bisher üblichen Vorrichtungen.

Die Vorrichtung kann sehr einfach und kostengünstig hergestellt werden, wenn gemäss einer Weiterbildung der Erfindung die Schalter jeweüs ein federelastisches Element aufweisen, das beim Einsetzen der entsprechenden Energiezelle bewegt und dadurch der Schaltkontakt unterbrochen wird. Das federelastische Element kann beispielsweise eine federelastische Zunge sein, die beim Einsetzen der entsprechenden Energiezelle in eine Position verschwenkt wird, in welcher der Kontakt unterbrochen ist.

Nach einer Weiterbildung der Erfindung weist die Vorrichtung einen Spannungskonverter und insbesondere einen Abwärts- oder Aufwärtsspannungskonverter auf. Damit kann sichergestellt werden, dass auch bei variabler Anzahl Energiezellen jeweils im Wesentlichen die gleiche konstante Spannung zur Verfügung steht.

Die Vorrichtung ist insbesondere für ein Gerät vorgesehen, das einen Lüfter aufweist, der mit dieser Vorrichtung betrieben wird. Der Lüfter dient hier beispielsweise zur Atemunterstützung in einer Schutzmaske. Die Zuverlässigkeit eines solchen Gerätes kann durch die Verwendung der erfindungsgemässen Vorrichtung wesentlich erhöht werden.

Ausführungsbeispiele der Erfindung werden nachfolgend anhand der Zeichnung näher erläutert. Es zeigen:
- Figur 1: schematisch eine erfindungsgemässe Vorrichtung, wobei die maximale Anzahl Energiezellen eingesetzt ist,
- Figur 2: die Vorrichtung gemäss Figur 1, jedoch mit weniger Energiezellen,
- Figur 3a: schematisch eine Batterie,
- Figur 3b: das Batteriefach gemäss Figur 3a, jedoch ohne Batterie,
- Figur 4a: schematisch ein Batteriefach nach einer Variante, jedoch ohne Batterie,
- Figur 4b: das Batteriefach gemäss Figur 4a, jedoch mit eingesetzter Batterie,
- Figur 5a: eine weitere Variante eines Energiefachs ohne Batterie,
- Figur 5b: das Batteriefach gemäss Figur 5a, jedoch mit eingesetzter Batterie,
- Figur 6a: eine weitere Variante eines Batteriefachs ohne Batterie,
- Figur 6b: das Batteriefach gemäss Figur 6a, jedoch mit eingesetzter Batterie,
- Figur 7: schematisch eine räumliche Ansicht einer erfindungsgemässen Vorrichtung gemäss einer weiteren Variante und
- Figur 8: ein achsialer Schnitt durch die Vorrichtung gemäss Figur 7.

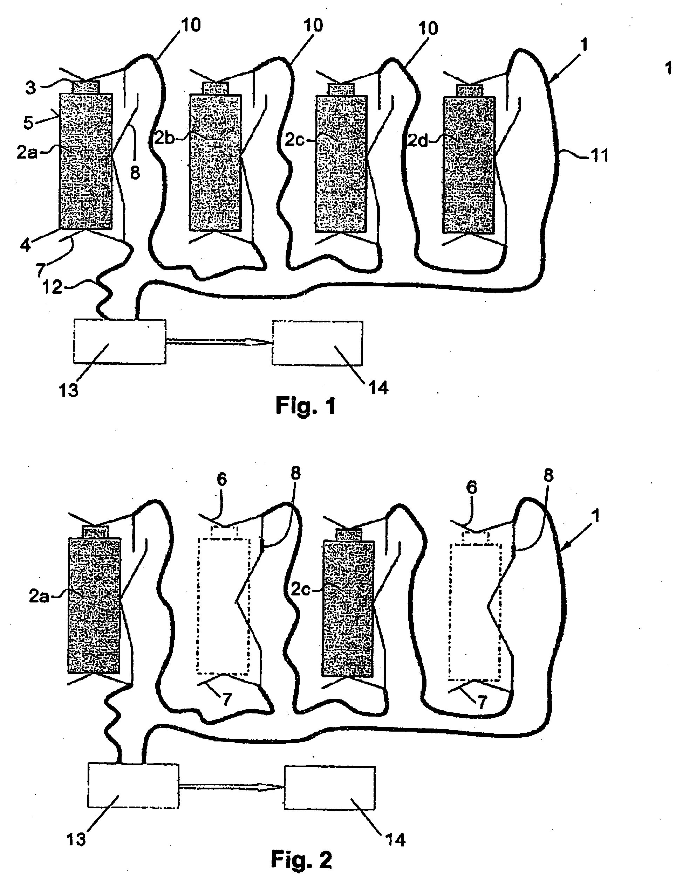

Die Figur 1 zeigt eine erfindungsgemässe Vorrichtung 1, die für vier Batterien 2a, 2b, 2c und 2d vorgesehen ist. Anstelle dieser Batterien können auch andere Energiezellen, beispielsweise Akkumulatoren oder dergleichen vorgesehen sein. Die Batterien 2a-2d sind in Serie geschalten und besitzen jeweils in an sich bekannter Weise einen ersten Pol 3, der beispielsweise der Pluspol ist und einen zweiten Pol 4, der beispielsweise der Minuspol ist. Der erste Pol 3 wird mit einem ersten Kontaktelement 6 und der zweite Pol 4 jeweils durch ein zweites Kontaktelement 7 kontaktiert. Zur Leitung eines Stromes der in Serie geschalteten Batterien 2a-2d sind elektrische Leiter 10, 11 und 12 vorgesehen, die mit einem Spannungskonverter 13 verbunden sind. Anstelle dieses Spannungskonverters 13 können die elektrischen Leiter 12 und 11 jedoch auch direkt oder über einen Verbinder mit dem Stromverbraucher verbunden sein.

Die Figur 2 zeigt die Vorrichtung 1 gemäss Figur 1, wobei hier lediglich die Batterien 2a und 2c eingesetzt sind. Die Batterien 2b und 2d fehlen hier jedoch. Anstelle der fehlenden Batterien verbindet jeweils ein Schalter 8 das erste Kontaktelement 6 mit dem zweiten Kontaktelement 7. Bei den eingesetzten Batterien 2a und 2c sind diese Kontaktelemente 6 und 7 jeweils über die Batterie 2a bzw. 2c miteinander verbunden, da hier der entsprechende Schalter 8 wie ersichtlich unterbrochen ist.

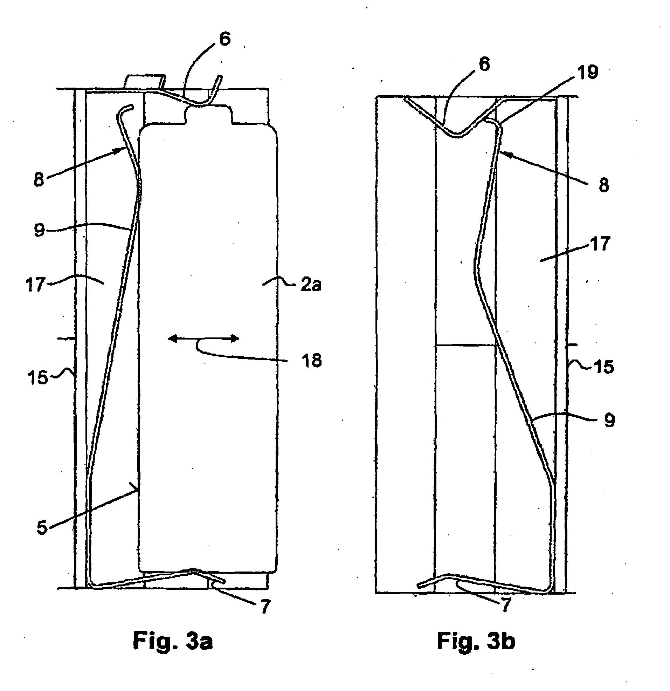

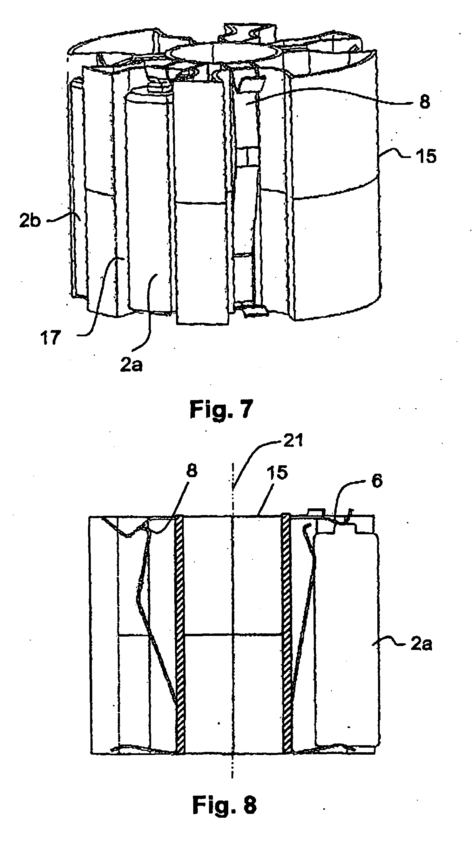

Die Figur 3a zeigt in vergrössertem Massstab ein Batteriefach 17 in einem Träger 15, der mehrere solche Fächer 17 aufweist, wie beispielsweise der in den Figuren 7 und 8 gezeigte Träger. In das Fach 17 ist die Batterie 2a eingesetzt, die vom ersten Kontaktelement 6 und vom zweiten Kontaktelement 7 elektrisch kontaktiert ist. Der Schalter 8 ist hier wie ersichtlich unterbrochen. Das erste Kontaktelement 6 ist somit mit dem elektrischen Leiter 10 und das zweite Kontaktelement 7 mit dem elektrischen Leiter 12 verbunden. Der Schalter 8 ist offen, da ein federelastisches Schaltkontaktteil 9 federelastisch an einer Mantelfläche 5 der Batterie 2a anliegt und damit in einer Offenstellung gehalten wird.

Die Batterie 2a wird gemäss Figur 3a in den Richtungen des Doppelpfeils 18 eingesetzt bzw. entnommen. Beim Entnehmen der Batterie 2 schwenkt der Schaltkontaktteil 9 aufgrund seiner Spannung in die in Figur 3b gezeigte Stellung und kontaktiert mit einem oberen Ende 19 das erste Kontaktelement 6. Der Schaltkontaktteil 9 ist immer noch gespannt, so dass das genannte Ende 19 in ständigem Kontakt mit dem ersten Kontaktelement 6 ist. Der Schalter 8 ist nun somit geschlossen und das erste Kontaktelement 6 ist mit dem zweiten Kontaktelement 7 über den Schaltkontaktteil 9 elektrisch verbunden. Wird in das Fach 17 wieder eine Batterie 2a eingesetzt, so wird der Schaltkontaktteil 9 quer zur Längsrichtung der Batterie 2a wieder in die in Figur 3a gezeigte Stellung bewegt, in welcher der Schalter 8 offen ist.

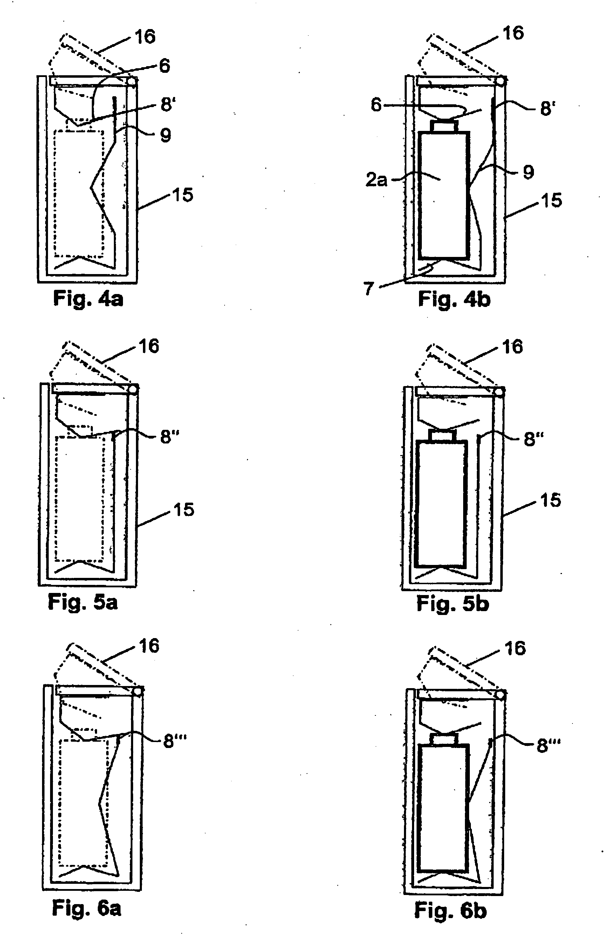

Die Figuren 4a und 4b zeigen einen Schalter 8' nach einer Variante. Bei dieser ist ein erstes Kontaktelement 6' an einem schwenkbaren Deckel 16 angeordnet. Bei geöffnetem Deckel 16 kann gemäss Figur 4b die Batterie 2a in den Richtungen des Doppelpfeils 20 und somit in Längsrichtung der Batterie 2a eingesetzt und entnommen werden. Bei leerem Fach 17' ist ein Schaltkontaktteil 19' gegen das erste Kontaktelement 6' gespannt und damit der Schalter 8' geschlossen. Bei eingesetzter Batterie 2a ist gemäss Figur 4b der Schalter 8' geöffnet.

Die Figuren 5a und 5b zeigen einen Schalter 8" gemäss einer weiteren Variante. Auch hier ist ein Deckel 16 vorgesehen, an dem das oben erwähnte erste Kontaktelement 6' angeordnet ist. Bei geschlossenem Schalter 8" ist dieses erste Kontaktelement 6' gemäss Figur 5a gegen einen Schaltkontaktteil 9" gespannt. Beim Einsetzen der Batterie 2a wird das erste Kontaktelement 6' von diesem Schaltkontaktteil 9" abgehoben und damit der Schalter 8" geöffnet. Der Schaltkontaktteil 9" wird bei dieser Variante nicht bewegt und verbleibt in der gezeigten gestreckten Anordnung.

Die Figuren 6a und 6b zeigen eine weitere Variante eines Schalters 8"'. Der hier vorgesehene Schaltkontaktteil 9"' ist wie der in den Figuren 4a und 4b gezeigte Schaltkontaktteil 9' ebenfalls in einem mittleren Bereich 9a geknickt oder gebogen. Der Schaltkontaktteil 9"' liegt hier jedoch mit seinem oberen Ende an der Unterseite des ersten Kontaktelementes 6' an, wenn in das Fach 17' keine Batterie eingesetzt ist, wie dies in der Figur 6a gezeigt ist. Beim Einsetzen der Batterie 2a in das Fach 17' wird der Schaltkontaktteil 19" quer zur Längsrichtung der Batterie 2a seitlich verschwenkt. Nach dem Schliessen des Deckels 16 ist das erste Kontaktelement 6' in einer angehobenen gespannten Position und damit wie ersichtlich der Schalter 8"' geöffnet.

Die gezeigten Schalter 8, 8', 8" und 8"' sind lediglich einige von mehreren möglichen Ausführungsbeispiele eines Schalters, die hier zweckmässig sind und die es ermöglichen, dass der Schalter beim Einsetzen der Batterie selbsttätig geöffnet und beim Entnehmen der Batterie selbsttätig wieder geschlossen wird.

Die Figuren 7 und 8 zeigen eine konkrete Ausführung der erfindungsgemässen Vorrichtung 1. Der Träger 15 ist hier als Trommelmagazin ausgebildet, das in einem hier nicht gezeigten Gehäuse eines Gerätes um eine Achse 21 rotierbar gelagert sein kann. Der Träger 15 besitzt sechs Fächer 17. In zwei dieser Fächer 17 ist hier jeweils eine Batterie 2a bzw. 2b eingesetzt. Das Einsetzen erfolgt hier radial. Grundsätzlich ist hier aber auch ein achsiales Einschieben bzw. Entnehmen möglich. Der oben erwähnte Spannungskonverter 13 ist hier nicht gezeigt und kann in einer Schaltung des Gerätes 14 angeordnet sein. Die Batterien 2a und 2b können übliche Batterien, beispielsweise Alkali-Batterien, Nickel-Cadmium-Batterien oder Lithium-Batterien mit einer Spannung von jeweils beispielsweise 1,5 Volt oder 1,2 Volt sein. Es sind selbstverständlich auch andere Spannungen denkbar. Mit dem genannten Spannungskonverter 13 kann bei einer seriellen Schaltung auch bei leeren Fächern 17 damit eine Spannung, beispielsweise von 6 Volt konstant gehalten werden. Dies auch bei abfallender oder unterschiedlicher Zellenspannung. Vorzugsweise sind sechs Fächer 17 jeweils mit einem Schalter 8 versehen. Diese können auch so ausgebildet sein, dass die Energiezellen 2a und 2b achsial einsetzbar sind. Denkbar ist auch eine Ausführung, bei der nicht sämtliche Fächer 17 mit einem Schalter 8 versehen sind. Beispielsweise könnten drei Fächer 17 wie bisher üblich und drei Fächer 17 erfindungsgemäss jeweils mit einem Schalter 8 versehen sein. Anstelle der zylindrischen. Anordnung der Energiezellen in einem Trommelmagazin ist auch eine andere Anordnung, beispielsweise eine Anordnung in einer Ebene denkbar.

### Bezugszeichenliste

- 1: Vorrichtung
- 2: Energiezelle
- 3: erster Pol
- 4: zweiter Pol
- 5: Mantelfläche
- 6: erstes Kontaktelement
- 7: zweites Kontaktelement
- 8: Schalter
- 9: Schaltkontaktteil
- 10: elektrische Leiter
- 11: elektrische Leiter
- 12: elektrische Leiter
- 13: Spannungskonverter
- 14: Gerät
- 15: Träger
- 16: Deckel
- 17: Fach
- 18: Doppelpfeil
- 19: oberes Ende
- 20: Doppelpfeil
- 21: Achse

## Patentansprüche

1. Vorrichtung für die Energieversorgung, mit einem Träger (15) für die Aufnahme von mehreren in Serie geschalteten Energiezellen (2a-2d), die jeweils einen Pluspol (3) und einen Minuspol (4) aufweisen, wobei im Träger (15) für jeden Pol ein elektrischer Kontakt (6, 7) vorgesehen, ist, welche bei eingesetzter Energiezelle (2a-2d) diese mit Anschlussstellen für die Energieentnahme verbinden, **dadurch gekennzeichnet, dass** jeder Pluspol (3) und jeweils der dazugehörende Minuspol (4) über einen Schalter (8) elektrisch miteinander verbunden sind und dieser Schalter (8) so ausgebildet ist, dass er beim Einsetzen einer Energiezelle (2a-2d) unterbrochen wird.

2. Vorrichtung nach Anspruch 1, **dadurch gekennzeichnet, dass** der Schalter (8) beim Einsetzen einer Energiezelle (2a-2d) selbsttätig unterbrochen wird.

3. Vorrichtung nach Anspruch 1 oder 2, **dadurch gekennzeichnet, dass** der Schalter (8) jeweils einen federelastischen Teil (9) aufweist, der beim Einsetzen einer Energiezelle (2a-2d) in eine Stellung bewegt wird, in welcher der Schaltkontakt des Schalters (8) unterbrochen ist.

4. Vorrichtung nach einem der Ansprüche 1 bis 3, **dadurch gekennzeichnet, dass** der Träger (5) als Revolvermagazin ausgebildet ist.

## Claims

1. An energy supply apparatus having a carrier (15) for accommodating a plurality of series-connected energy cells (2a-2d), which each have a positive terminal (3) and a negative terminal (4), an electrical contact (6, 7) being provided in the carrier (15) for each terminal, which electrical contacts when the energy cell (2a-2d) has been inserted, connect said energy cell to connection points for drawing energy, wherein each positive terminal (3) and in each case the associated negative terminal (4) are electrically connected to one another via a switch (8), and this switch (8) is designed such that it is interrupted when an energy cell (2a-2d) is inserted.

2. The apparatus as claimed in claim 1, wherein the switch (8) is automatically interrupted when an energy cell (2a-2d) is inserted.

3. The apparatus as claimed in claim 1 or 2, wherein the switch (8) in each case has a spring-elastic part (9), which is moved, when an energy cell (2a-2d) is inserted, into a position in which the switching contact of the switch (8) is interrupted.

4. The apparatus as claimed in one of claims 1 to 3, wherein the carrier (5) is in the form of a revolver magazine

## Revendications

1. Dispositif pour l'alimentation en énergie, comprenant un support (15) pour recevoir plusieurs piles d'alimentation en énergie (2a-2d) montées en série, qui présentent à chaque fois un pôle positif (3) et un pôle négatif (4), un contact électrique (6, 7) étant prévu pour chaque pôle dans le support (15), lesquels contacts, lorsque la pile d'alimentation en énergie (2a-2d) est insérée, la connectent à des points de raccordement pour le prélèvement d'énergie, **caractérisé en ce que** chaque pôle positif (3) et à chaque fois le pôle négatif associé (4) sont connectés électriquement l'un à l'autre par le biais d'un commutateur (8), et ce commutateur (8) est réalisé de telle sorte qu'il soit coupé lors de l'insertion d'une pile d'alimentation en énergie (2a-2d).

2. Dispositif selon la revendication 1, **caractérisé en ce que** le commutateur (8) est coupé automatiquement lors de l'insertion d'une pile d'alimentation en énergie (2a-2d).

3. Dispositif selon la revendication 1 ou 2,
**caractérisé en ce que** le commutateur (8) présente dans chaque cas une partie élastique à ressort (9) qui est déplacée lors de l'insertion d'une pile d'alimentation en énergie (2a-2d), dans une position dans laquelle le contact de commutation du commutateur (8) est coupé.

4. Dispositif selon l'une quelconque des revendications 1 à 3, **caractérisé en ce que** le support (5) est réalisé sous forme de magasin revolver.
